# EUROPEAN PATENT SPECIFICATION

(11) **EP 0 845 740 B1**
(45) Date of publication and mention of the grant of the patent: **18.09.2002**
(21) Application number: 97120773.3
(22) Date of filing: 26.11.1997
(51) Int. Cl.: G06F 7/52

(54) **A multiplier unit**
Multipliziereinheit
Unité de multiplication

(30) Priority: 27.11.1996 US 32502 P
(43) Date of publication of application: 03.06.1998
(73) Proprietor: Texas Instruments Incorporated, Dallas, Texas 75265 (US)
(72) Inventor: Gatherer, Alan, Richardson, TX 75082 (US); Lemonds, Carl E., Garland, TX 75044 (US)
(74) Representative: Holt, Michael

(56) References cited:
- EP-A- 0 517 241
- US-A- 4 811 269
- XINGCHA FAN ET AL: "DATA FORMATS AND ARITHMETIC OPERATORS FOR SERIAL/PARALLEL TRADE- OFFS IN PIPELINED ARCHITECTURES" PROCEEDINGS OF THE INTERNATIONAL SYMPOSIUM ON CIRCUITS AND SYSTEMS, NEW ORLEANS, MAY 1 - 3, 1990, vol. 2 OF 4, 1 May 1990, INSTITUTE OF ELECTRICAL AND ELECTRONICS ENGINEERS, pages 1248-1251, XP000167038
- D. ESTEBAN: "TIME-SHARED SHIFT ACCUMULATOR" IBM TECHNICAL DISCLOSURE BULLETIN., vol. 15, no. 3, August 1972, NEW YORK US, pages 763-764, XP002056987
- P. BUCKLE ET AL.: "Programmable shift registers for numerical multiplication" RADIO AND ELECTRONIC ENGINEER., vol. 44, no. 1, January 1974, LONDON GB, pages 33-38, XP002056988

## Description

### FIELD OF THE INVENTION

This invention relates to data processing systems and, more particularly, to data processing system multiplier components that multiply a multiplicand represented by data bits by a multiplier represented by data bits.

### BACKGROUND OF THE INVENTION

In the related art, multiplier units, such as the booth multiplier unit or the parallel multiplier unit, typically have a low utilization of components. This low utilization is the result of the time for data to ripple through the multiplier unit. In both of the cited multiplier configurations, the ripple time results from the time for the data to be processed by the summation stage of the multiplier unit. In the past, in order to reduce the ripple time, carry look-ahead circuits have been implemented. However, the implementation of carry look-ahead circuits provides a significant increase in the complexity and number of components needed for the multiplier unit.

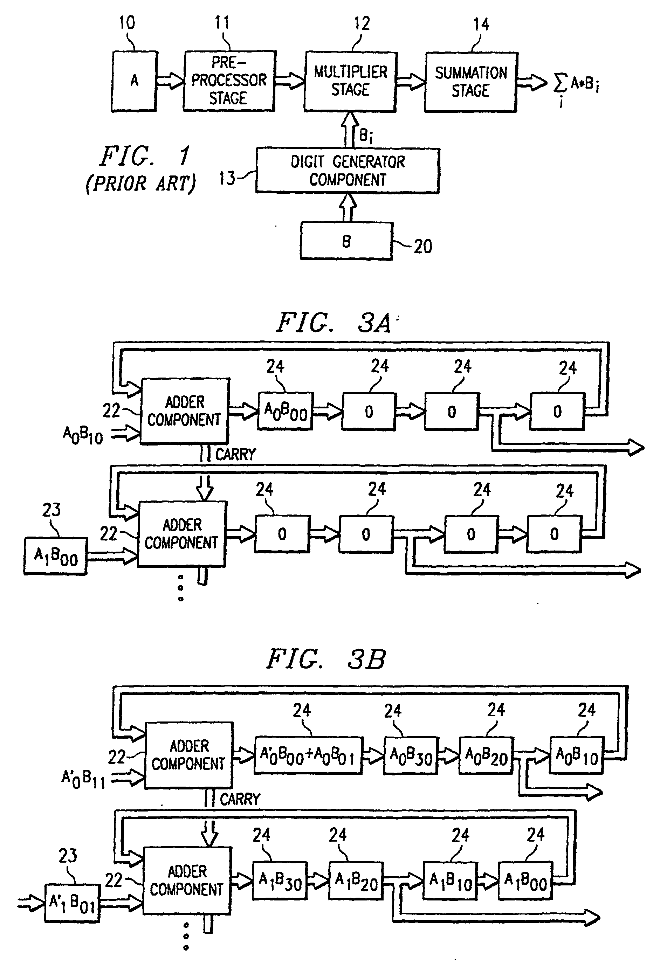

Referring to Fig. 1, the , multiplier unit for the multiplication of a binary multiplicand A by a binary multiplier B unit can typically be divided into three stages. The first stage is a preprocessing of multiplicand A stored in register 10 by preprocessor stage 11 to simplify the apparatus used to implement the multiplication procedure. The digit generator component 13 next provides the i^{th} digit of the multiplier B stored in register 20, i.e., Bᵢ. The second stage generates the product A*Bᵢ which is generated internally within the second stage or the multiplier stage 12. In the third stage the generation, or the summation stage 14, the sum of A*Bᵢ is generated, this partial product being shifted by Sᵢ, (i.e., the position of the multiplier bit Bᵢ in the multiplier register 20). The operation of these three stages generate the desired result because B = SUM(i){Bᵢ2^{Si}}. For example, in a simple shift and add multiplier unit, the preprocessor stage 11 is inactive. The multiplier stage 12 multiplies A by either 1 or 0, this binary bit being the i^{th} digit of B. The summation stage 14 shifts the products by Sᵢ and adds all the results together.

In this example, most of the complexity is in the third or summation stage. The second or multiplier stage is relatively simple because the "digits" of the multiplier are either 1 or 0. The utilization of the adder components is low because in the third or summation stage 14, the additions take place serially and are added to a single running sum. However, in many instances of multiplier units, a longer time for performing the multiplication function can be tolerated when fewer components are needed to perform the multiplication operation.

Moreover US patent no. 4,811,269 discloses a 32-bit by 32-bit multiplication unit which partitions both the 32-bit multiplicand and the 32-bit multiplier into four 8-bit portions and uses four 8-bit by 8-bit multiplication units to create partial products. The multiplication unit avoids shifting the partial products during subsequent additions by cyclic shifting the four 8-bit portions of the multiplicand input into the four 8-bit by 8-bit multiplication units.

A need has therefore been felt for an apparatus to provide for a higher utilization of the components of the multiplier unit. The higher component utilization results in a greater number of processing cycles to implement a multiplication procedure. In addition, it is further desirable that much of the addition of partial products be performed in the second or multiplier stage resulting in relatively little carry-ripple activity in the third or summation stage.

### SUMMARY OF THE INVENTION

The aforementioned and other features are accomplished by a multiplier apparatus as defined in independent claim 1. Further embodiments of the invention are specified in the dependent claims.

### BRIEF DESCRIPTION OF THE DRAWINGS

The present invention will now be further described by way of example, with reference to the accompanying drawings in which:
Figure 1 is a block diagram illustrating the general architecture of a three stage multiplier unit.
Figure 2 is a block diagram of the second or multiplier stage of a three stage architecture according to the present invention.
Figure 3A illustrates the identity of the contents of the delay components in the least significant digit data path and the next least significant digit data path of apparatus of Fig. 2 after a first multiplier cycle;
Figure 3B illustrates the contents of the delay elements in the least significant digit data path and the next least significant digit data path of the apparatus of Fig. 2 after five multiplier cycles.
Figure 4 is a block diagram illustrating the application of partial products from multiplier stage to the summation stage of a multiplier unit according to the present invention.
Figure 5 is an expanded view of the overlap of the partial products provided by the multiplier stage to the summation stage of the multiplier unit of Fig. 2.
Figure 6 is a block diagram illustrating a special case of the present invention.

### DETAILED DESCRIPTION OF THE DRAWINGS

Figure 1 has been described with respect to the related art.

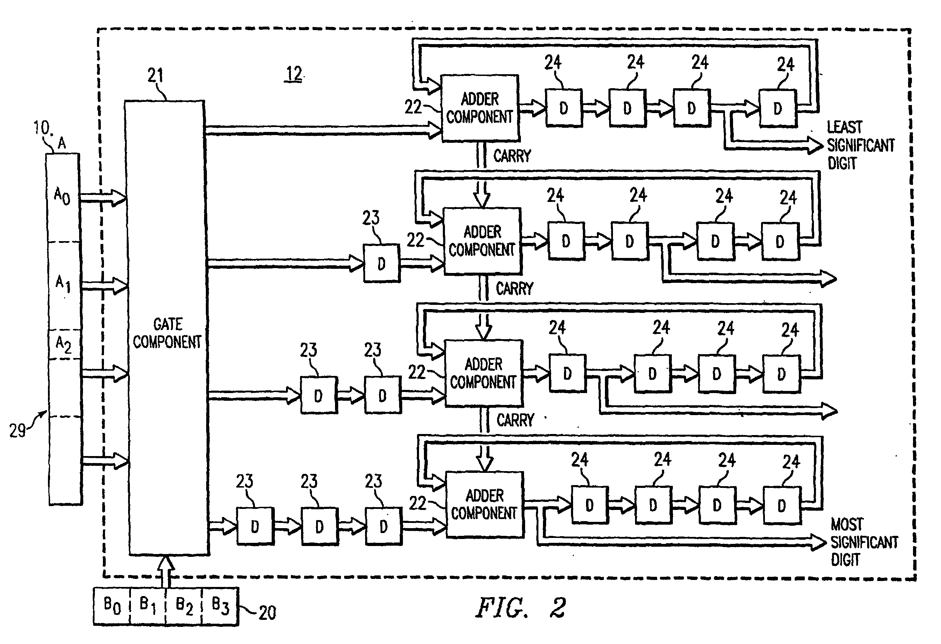

Referring to Fig. 2, a block diagram of the second or multiplier stage 12 of a multiplier unit according to the present invention is shown. The multiplicand A has M logic signals and is divided into P digits or groups of logic signals, the digits being labelled A₀-A_{P-1}. The multiplicand A is stored in register 10 shown in Fig. 1. Note that register 10 of Fig. 2 has an additional portion 29. The multiplicand A is shifted during the operation of the multiplier and the larger register is needed to accommodate this shifting. The multiplicand A is applied to a gate component 21. The transmission of the multiplicand A through the gate component 21 is determined by which logic bit of the multiplier B is applied to a control terminal of gate component 21. Whether the gate component transmits the bits of multiplicand A or transmits the opposite logic state of the bits of multiplicand A depends of the logic state of the bit applied to the control terminal of the gate component 21. The multiplier B is divided into a K digits or groups of logic signals, i.e., B₀-B_{K-1}. The transmitted signals from the gate component 21 are applied to series of K adder units 22. The least significant digit of multiplicand A, A₀, when transmitted by the gate component 21, is applied directly to the first (i.e., least significant) adder component 22. The second least significant digit of multiplicand A, A₁, when transmitted by the gate component 21, is applied through a single delay component 23 to the second (i.e., next least significant) adder component 22. Each additional digit of A, transmitted by the gate component 21, is applied to an associated (i.e., increasingly significant) adder component 22 through one additional delay component 23. The most significant digit, A_{P-1}, when transmitted by the gate component 21, is applied to the associated adder unit 22 through P-1 delay components 23. The output signal of the adder units 22 are each applied to the K delay components 24 coupled in series. The output of the last delay component 24 is coupled to a second input terminal of the associated adder component 22. The least significant digit output signal is taken from the input terminal of the last of the K delay components coupled to the adder unit 22 associated with the least significant digit of the multiplicand, A₀. The next least significant digit is provided from the input of the next to last delay component 24 associated with the adder component 22 receiving the next least significant digit of the multiplicand, A₁. The most significant output digit is provided from the adder component 22 receiving the most significant bit from the multiplicand, A_{P-1}. A carry-out bit is applied from an adder component 22 to a carry-in terminal of the adder component 22 associated with the next higher multiplicand digit. The multiplier is N bits in length. When the multiplicand has M bits and is stored in the M less significant bits of register 10 (register 10 being M+L bits in length), the M+L bits being divided into K digits with (M+L)/K logic bits. The multiplier is N bits in length, the N bits being divided into K digits with N/K=L logic bits. The adder component in the multiplier stage is M+L bits in length and each multiplier stage adder components 22 are (M+L)/K logic bits in length. Each adder component 22 receives its input signals one cycle or clock period after the previous adder component 22 received its input signals. Because of the reduced adder component 22 length resulting from the skewed application of partial products, the critical path is reduced.

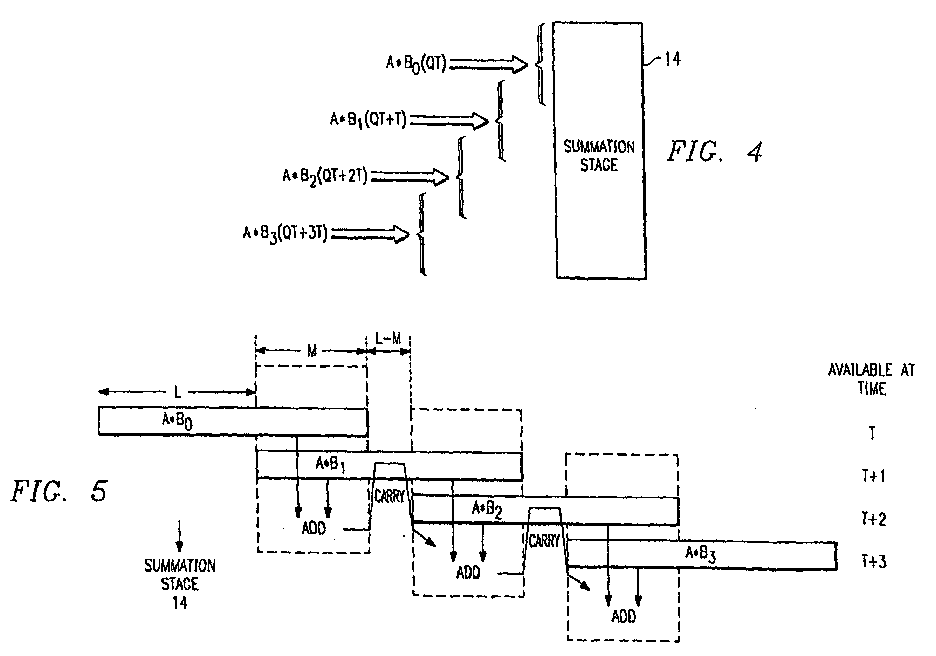

Referring to Fig. 3A, the contents of the delay components 23 and 24 associated with the adder component 22 receiving the least significant digit from the multiplicand and the contents of delay components 23 and 24 associated with the adder unit receiving the next least significant digit from the multiplicand are shown after one time period T of operation of the multiplier unit in Fig. 2. In Fig. 3B, the contents of the same delay components 23 and 24 are shown after 5 time periods T, the multiplier being divided into 4 digits.

Referring to Fig. 4, the signals applied to the summation stage 14, according to the present invention, is shown. After Q=(N+K-1) cycles or time periods T, output of multiplier unit 12 is A*B₀. During the next time period, i.e. (N+K) cycles or time periods, the output of the multiplier unit is A*B₁. During the subsequent 2 time periods, the output of the multiplier unit is A*B₂ and A*B₃ is provided. These partial products are added in sequence in the summation stage 14.

Referring to Fig. 5, the output logic signals for partial products from the multiplier stage 12 is shown. M is the number of bits of the multiplicand, while L is the number of logic signals for each of the multiplier digits. The K partial products from the multiplier stage 12 to be applied to the summation stage 14 is L+M bits in width. The multiplier unit is configured wherein each of the K partial products is available on succeeding clock cycles because of the skewing resulting from the delay components 23. Each of the K partial products is shifted by L bit positions with respect to the previous partial product from the multiplier stage 12.

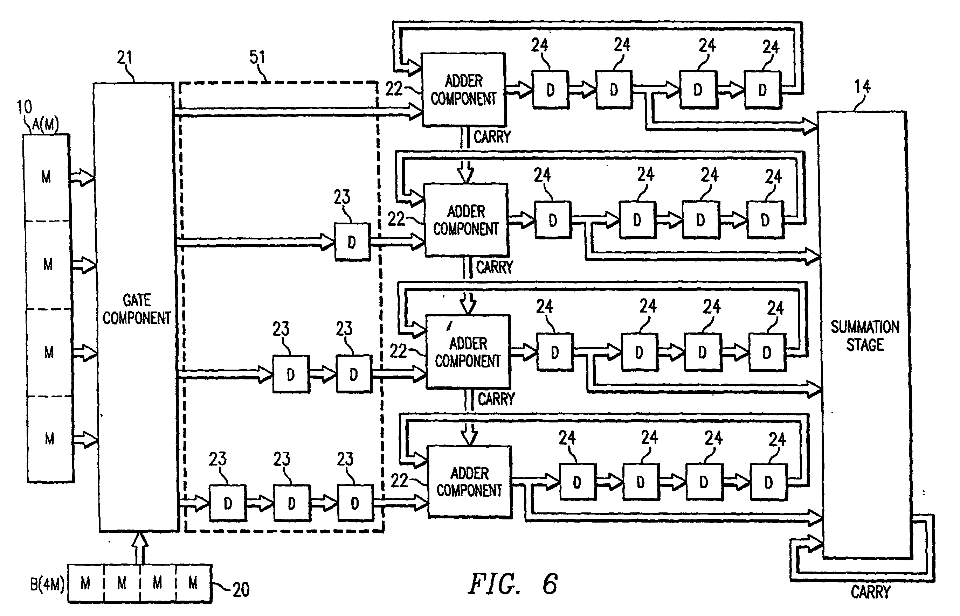

Referring to Fig. 6, an implementation of the present invention for the situation wherein the multiplier B is a multiple R (i.e., 4) of the multiplicand A is shown. The configuration is similar to that of Fig. 2. However, the output for the least significant digit from the multiplier stage is taken from the input to the next to last delay component 24. Both of the next two digits are received from the input to the delay line 24 preceding the next to the last delay line 24. The most significant digit is taken from the output of the adder unit 22, i.e., the adder unit 22 associated with the most significant digit of the multiplicand. In general, the most significant half of the output signals of the multiplier stage 12 are delayed by one cycle or time period compared to the least significant half of the signals.

The present invention can be understood in the following manner. Referring to Fig. 2, the partial product of B₀₀ (i.e., the first bit of the first multiplier digit) and multiplicand A is entered in the adder units (an adder unit includes the adder and delay components) and stored. The partial product of B₁₀ (the first bit of the second multiplier digit) is then entered in the adder unit and stored. This process is continued until all the partial products of the multiplicand A and all the first bits of the multiplier digits are stored {i.e., A*(B₀₀+...+B_{(K-1)0})}. Then, multiplicand A is shifted in register 10 one bit position and the foregoing process is repeated with the exception that the partial products of the same multiplier digit position are combined. This process is repeated for each bit position of the multiplier digits. Referring to Fig. 2, as a result of the skewing resulting from the delay components 23, the delay components 24 accumulate partial products of Aₚ*Bₖ. The manner in which the output signals are extracted from the delay components 24, i.e., the partial products are obtained from one additional delay line for each increase in adder significance, results in partial products A*Bₖ being applied to the summation unit 14 during consecutive time periods. The K partial products from the multiplier stage 12 are shifted by Ki increments and the K partial products cn be processed separately or combined. Because the digits do not overlap in binary representation, the results to be added overlap only by M, the size of the multiplicand A. These partial products can therefore be added using M length adders in the summation stage 14. The overlap of the partial products in shown in Fig. 5. Fig. 5 also illustrates a carry ripple of length L-M. Provided L>M, addition in the summation stage can be performed using a length M adder and a length L-M carry propagate unit. Thus the summation stage can be implemented by a fast shift of length L and an M bit adder unit.

When L=M, the adder of the present invention can be implemented as shown in Fig. 5. The most significant half of the multiplier stage at time period T is added to the least significant half at time T+1. The resultant carry is then carried into the next add operation. The partial products leave the multiplier in M slices. The most significant and least significant portions can be directly added to produce the desired result (except that the first output is the least significant half). The gate and shift component which is included in the general implementation can be included in the shift operation of the preprocessor stage 11.

The present invention results in a greater usage of components at the expense of additional latency. The adder units 22 are used a multiplicity of times during the accumulation of the Aₚ*Bₖ partial products.

Referring once again to Fig. 5, the summation stage includes a ripple carry of length L-M bits that connects the carry-out of addition to the carry-in of the another addition. When L>M, the addition is simplified because the addition can be performed with an adder of length M bit positions and a length L-M bit position carry propagate unit. When L-M = 0, only a routing of length L and an M bit adder unit with carry apparatus is needed to implement the summation stage.

The present invention is intended to utilize less apparatus while requiring a greater number of cycles to execute the multiplication operation. The latency for the partial product A₀*B₀ is N cycles, while the latency for the partial product A*B₀ is N+K-1 cycles. However, the latency can be reduced by increasing the amount of apparatus. For example, by appropriate increase in the complexity of the apparatus of the gate component 21, two (or more) bits from the multiplier B could be applied added to the gate component 21 and these bits "encoded" with multiplicand A before being applied to the remainder of the multiplier stage. The latency can thus be improved, but at the expense of an increase in the amount of apparatus. Furthermore, the delay components coupled to the input terminals of the adder components can be eliminated by increasing the complexity of the gate component, i.e., by appropriate shifting (or routing) of portions of the multiplicand A.

While the invention has been described with particular reference to the preferred embodiment, it will be understood by those skilled in the art that various changes may be made and equivalents substituted for elements of the preferred embodiment without departing from the invention as claimed. In addition, many modifications may be made to adapt a particular situation and material to a teaching of the present invention without departing from the essential teachings of the present invention as claimed.

## Claims

1. A multiplier apparatus including a shift register, a plurality of adders and a summation stage, **characterized in that**:-
the shift register (10,29) is of L+M bits divided into K sections of (L+M)/K bits each, where K, L, and M are positive integers greater than 1;
there are K adders (22), each of said adders having a sum output and (a) a first input of size (L+M)/K bits coupled through a gate component (21) and J delays (23) to a corresponding one of said shift register sections where J defines the adder position, (b) a second input of size (L+M)/K bits coupled to said sum output through a feedback loop of K delays to a second input, and for J = 0, 1, ..., K-1 a carry output coupled to a carry input of a neighboring adder;
said summation stage (14) has K inputs coupled to corresponding ones of said feedback loops with the coupling to the feedback loop of each adder being after a respectively selected number of delays from said sum output;
and further **characterized by** a gate component control (21) ; arranged such that a multiplicand A of M bits in said shift register and a multiplier B of K*L bits in said gate component control may be multiplied by iteratively using the bits of said multiplier B to control whether bits of said multiplicand A are passed to said adders and wherein said iteratively using has an inner loop of K iterations each using a bit from one of K sections of B and an outer loop of L iterations each applying the inner loop after said multiplicand is shifted a bit in said shift register.

2. The multiplier apparatus of Claim 1, wherein a sequence of partial products A*Bₖ, where k is 0 through K-1, are applied to said summation stage.

3. The multiplier apparatus of any preceding claim wherein the opposite logic state of the bits of the multiplicand is transmitted, dependent upon the multiplier.

4. The multiplier apparatus of any of Claims 1 to 3, wherein the selected number of delays is K-J, -1.

5. The multiplier apparatus of any preceding claim, wherein the number of logic signals of the multiplier is a multiple of the number of logic signals of the multiplicand.

6. The multiplier apparatus of any of Claims 1 to 5, wherein a more significant A*Bₖ partial product is applied to said summation unit prior to a next less significant A*Bₖ partial product.

## Patentansprüche

1. Multiplikationsvorrichtung, die ein Schieberegister, mehrere Addierer und eine Summationsstufe umfaßt, **dadurch gekennzeichnet, daß**:
das Schieberegister (10, 29) aus L + M Bits besteht, die in K Abschnitte aus jeweils (L + M)/K Bits bestehen, wobei K, L und M positive ganze Zahlen größer als 1 sind;
K Addierer (22) vorgesehen sind, wovon jeder einen Summenausgang, (a) einen ersten Eingang mit einer Größe von (L + M)/K Bits, der über eine Gatterkomponente (21) und J Verzögerungen (23) mit einem entsprechenden der Schieberegisterabschnitte verbunden ist, wobei J die Addiererposition definiert, und (b) einen zweiten Eingang mit einer Größe von (L + M)/K Bits, der mit dem Summenausgang über eine Rückkopplungsschleife aus K Verzögerungen verbunden ist, besitzt und wovon jeder, für J = 0, 1, ..., K - 1, einen Übertragausgang besitzt, der mit einem Übertrageingang eines benachbarten Addierers verbunden ist;
die Summationsstufe (14) K Eingänge besitzt, die mit entsprechenden der Rückkopplungsschleifen verbunden sind, wobei die Verbindung mit der Rückkopplungsschleife jedes Addierers hinter einer jeweils ausgewählten Anzahl von Verzögerungen vom Summenausgang angeordnet ist;
und ferner **gekennzeichnet durch** eine Gatterkomponentensteuerung (21); die so beschaffen ist, daß ein Multiplikand A aus M Bits in dem Schieberegister und ein Multiplikator B aus K × L Bits in der Gatterkomponentensteuerung **durch** iterative Verwendung der Bits des Multiplikators B multipliziert werden können, um zu steuern, welche Bits des Multiplikanden A zu den Addierern durchgelassen werden, wobei die iterative Verwendung eine innere Schleife aus K Iterationen, wovon jede ein Bit aus einem von K Abschnitten von B verwendet, sowie eine äußere Schleife aus L Iterationen, wovon jede die innere Schleife anwendet, nachdem der Multiplikand im Schieberegister um ein Bit verschoben worden ist, umfaßt.

2. Multiplikationsvorrichtung nach Anspruch 1, bei der auf die Summationsstufe eine Folge von Partialprodukten A × Bₖ, wobei k von 0 bis K - 1 läuft, angewendet wird.

3. Multiplikationsvorrichtung nach einem vorhergehenden Anspruch, bei der in Abhängigkeit vom Multiplikator der entgegengesetzte logische Zustand der Bits des Multiplikanden gesendet wird.

4. Multiplikationsvorrichtung nach einem der Ansprüche 1 bis 3, bei der die ausgewählte Anzahl von Verzögerungen K - J - 1 beträgt.

5. Multiplikationsvorrichtung nach einem vorhergehenden Anspruch, bei der die Anzahl von logischen Signalen des Multiplikators ein Vielfaches der Anzahl von logischen Signalen des Multiplikanden ist.

6. Multiplikationsvorrichtung nach einem der Ansprüche 1 bis 5, bei der ein höherwertigeres (A × Bₖ)-Partialprodukt auf die Summationseinheit vor einem nächstniedrigerwertigen (A × Bₖ)-Partialprodukt angewendet wird.

## Revendications

1. Equipement de multiplication comprenant un registre à décalage, une pluralité d'additionneurs et un étage de sommation, **caractérisé en ce que** :
le registre à décalage (10, 29) est de L+M bits divisés en K sections de (L+M)/K bits chacune, où K, L, et M sont des nombres entiers positifs supérieurs à 1 ;
il y a K additionneurs (22), chacun desdits additionneurs ayant une sortie de sommation et (a) une première entrée de (L+M)/K bits reliée par un composant de porte (21) et J retards (23) à une correspondante desdites sections de registre à décalage où J définit la position de l'additionneur, (b) une deuxième entrée de (L+M)/K bits reliée à ladite sortie de sommation par une boucle de rétroaction de K retards vers une deuxième entrée, et pour J = 0, 1, ..., K-1 une sortie de report reliée à une entrée de report d'un additionneur voisin ;
ledit étage de sommation (14) a K entrées reliées à celles correspondantes desdites boucles de rétroaction avec le couplage à la boucle de rétroaction de chaque additionneur se faisant après un nombre respectivement sélectionné de retards à partir de ladite sortie de sommation ;
et **caractérisé en outre par** une commande du composant de porte (21) ; conçue de telle sorte qu'un multiplicande A de M bits dans ledit registre à décalage et un multiplicateur B de K*L bits dans ladite commande de composant de porte peuvent être multipliés en utilisant de manière itérative les bits dudit multiplicateur B afin de contrôler si des bits dudit multiplicande A sont passés vers lesdits additionneurs et dans lequel ladite utilisation itérative a une boucle interne de K itérations utilisant chacune un bit d'une des K sections de B et une boucle externe de L itérations appliquant chacune la boucle interne après que ledit multiplicande soit décalé de un bit dans ledit registre à décalage.

2. Equipement de multiplication selon la revendication 1, dans lequel une succession de produits partiels A*Bₖ, où k est compris entre 0 et K-1, est appliquée audit étage de sommation.

3. Equipement de multiplication selon l'une quelconque des revendications précédentes, dans lequel l'état logique opposé des bits du multiplicande est transmis, en fonction du multiplicateur.

4. Equipement de multiplication selon l'une des revendications 1 à 3, dans lequel le nombre sélectionné de retards est K-J-1.

5. Equipement de multiplication selon l'une quelconque des revendications précédentes, dans lequel le nombre de signaux logiques du multiplicateur est un multiple du nombre de signaux logiques du multiplicande.

6. Equipement de multiplication selon l'une des revendication 1 à 5, dans lequel un produit partiel A*Bₖ plus significatif est appliqué à ladite unité de sommation avant un produit partiel A*Bₖ moins significatif suivant.
